(19) Europäisches Patentamt

European Patent Office

Office européen des brevets

(11) Veröffentlichungsnummer: **0 349 750**

**A1**

## (12) EUROPÄISCHE PATENTANMELDUNG

(21) Anmeldenummer: 89109564.8

(22) Anmeldetag: 26.05.89

(51) Int. Cl.⁴: **H02H 3/20 , H02H 3/06**

(30) Priorität: 07.07.88 CH 2597/88

(43) Veröffentlichungstag der Anmeldung:
**10.01.90 Patentblatt 90/02**

(84) Benannte Vertragsstaaten:
**CH DE FR GB IT LI NL**

(71) Anmelder: **Werkzeugmaschinenfabrik
Oerlikon-Bührle AG
Birchstrasse 155
CH-8050 Zürich(CH)**

(72) Erfinder: **Bärtsch, Rudolf
Hägelerweg 5
CH-8055 Zürich(CH)**
Erfinder: **Jetzer, Felix
Musterleestrasse 11
CH-5442 Fislisbach(CH)**

(54) **Ausgleichs- und Überspannungsschutzschaltung für elektronische Geräte.**

㊼ Bei solchen Geräten, insbesondere bei einer Bremseinrichtung eines Schienenfahrzeuges, ist es wichtig, dass ein zuverlässiger Schutz gegen Störung und Zerstörung durch Ausgleichs- und Ueberspannungen vorhanden ist, wobei bei Wegfall der Störung das elektrische Gerät automatisch wieder der Speisung zugeschaltet wird. Dies wird erreicht, indem eine Schutzschaltung folgende Funktionsblökke aufweist:
- eine als Hochspannungsbegrenzer ausgebildete und parallel zum Eingang der Schutzschaltung geschaltete Eingangsstufe (1),
- einen der Eingangsstufe (1) parallel nachgeschalteten Spannungsteiler (2),
- einen dem Spannungsteiler (2) nachgeschalteten Komparator (3), dessen Eingang mit dem Ausgang des Spannungsteilers (2) verbunden ist,
- eine stabilisierte, überspannungsgeschützte Speisung (4) für den Komparator (3) und
- einen ersten und einen zweiten elektronischen Schalter (5 und 6), wobei der erste Schalter (5), dessen Schalteingang mit dem Ausgang des Komparators (3) verbunden ist, im Schaltkreis des zweiten Schalters (6) und der zweite Schalter (6) zwischen Eingang und Ausgang der Schutzschaltung angeordnet sind.

EP 0 349 750 A1

## Ausgleichs- und Ueberspannungsschutzschaltung für elektronische Geräte.

Die Erfindung betrifft eine Ausgleichs- und Ueberspannungsschutzschaltung für elektronische Geräte, insbesondere bei einer Bremseinrichtung eines Schienenfahrzeuges.

Aus der Praxis sind verschiedene Begrenzerschaltungen zum Schutz vor Ueberspannungen bekannt, welche beim Auftreten einer bestimmten Störung ein Gerät abschalten oder die Stromzufuhr unterbrechen. Nach Wegfall der Störung sind die Begrenzerschaltungen entweder zu ersetzen, z.B. Sicherungen, oder manuell wieder einzuschalten, z.B. Schütz.

Die Erfindung, wie sie in den Ansprüchen gekennzeichnet ist, löst die Aufgabe, eine Ausgleichs- und Ueberspannungsschutzschaltung für elektronische Geräte zu schaffen, welche einen einfachen Schaltungsaufbau aufweist und mit der das Gerät gegen Störungen und Zerstörungen, verursacht durch Ausgleichs- und Ueberspannungen in der Speisung, geschützt und nach Wegfall der Störung automatisch wieder an die Speisung zugeschaltet wird.

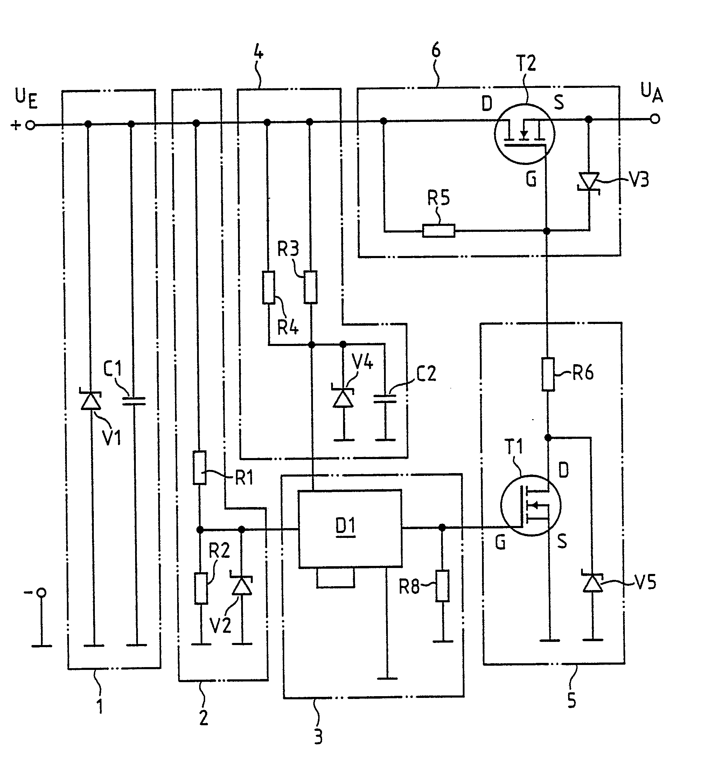

Die durch die Erfindung erreichten Vorteile sind im wesentlichen darin zu sehen, dass die Schutzschaltung praktisch von der Störleistung unabhängig ist sowie im Störungsfall einen geringen Leistungsbedarf aufweist. Nachfolgend wird anhand einer einzigen Zeichnung, welche ein Schaltungsschema darstellt, ein Ausführungsbeispiel der Erfindung erläutert.

Gemäss der einzigen Zeichnung enthält eine erfindungsgemässe Schutzschaltung, beispielsweise als Adapter zwischen einer Stromquelle und einem zu schützenden Gerät, welche in der Zeichnung nicht dargestellt sind, ausgebildet, die nachfolgenden Schaltungsblöcke: Eine parallel zum Eingang geschaltete und als Hochspannungsbegrenzer ausgebildete Eingangsstufe 1, einen parallel zur Eingangsstufe 1 und dieser nachgeschalteten Spannungsteiler 2 und einen parallel zum Spannungsteiler 2 und diesem nachgeschalteten Komparator 3 und seiner zugehörigen Speisung 4 sowie einen dem Komparator nachgeschalteten ersten elektronischen Schalter 5 und einen zwischen Eingang und Ausgang der Schutzschaltung angeordneten zweiten elektronischen Schalter 6, welcher vom ersten Schalter 5 gesteuert wird.

Die Eingangsstufe 1 enthält eine Transientenschutzdiode V1 und einen dazu parallel geschalteten Kondensator C1. Der Spannungsteiler 2 enthält zwei in Serie geschaltete Widerstände R1 und R2 und eine parallel zum Widerstand R2 geschaltete Transientenschutzdiode V2, wobei die Spannung über dem Widerstand R2 als Ausgang des Spannungsteilers 2 dem Eingang des Komparators 3 zugeleitet wird. Der Komparator 3 ist ein handelsübliches Bauteil, hier auch mit D1 bezeichnet. Zwischen seinem Ausgang und dem Negativpotential der Schutzschaltung ist ein Widerstand R8 geschaltet. Die Speisung des Komparators D1 erfolgt vom Pluspotential der Schutzschaltung über die parallel geschalteten Widerstände R3 und R4, wobei die Speisespannung am Komparator D1 durch eine Transientenschutzdiode V4 stabilisiert und gegenüber Spannungsimpulse geschützt sowie durch einen parallel geschalteten Kondensator C2 gestützt wird. Als ersten elektronischen Schalter 5 ist beispielsweise ein Feldeffekt-Transistor T1 vorgesehen, wobei der G-Anschluss, auch Gate genannt, mit dem Ausgang des Komparators D1, der S-Anschluss, auch Source genannt, direkt und der D-Anschluss, auch Drain genannt, über eine Transientenschutzdiode V5 mit dem Negativpotential verbunden sind. Als zweiter elektronischer Schalter 6 ist ebenfalls ein Feldeffekt-Transistor T2 vorgesehen, wobei die D- und S-Anschlüsse den Eingang und den Ausgang der Schutzschaltung verbinden und der G-Anschluss über einen Widerstand R5 mit dem D-Anschluss und über eine Transientenschutzdiode V3 mit dem S-Anschluss sowie über einen in diesem Beispiel zum ersten Schalter 5 zugeordneten Widerstand R6 mit dem D-Anschluss des ersten Schalters 5 verbunden ist.

Daraus ergibt sich folgende Wirkungsweise: Alle Spannungen über der Durchbruchsspannung der Transientenschutzdiode V1, deren theoretische Reaktionszeit beispielsweise bei 1ps liegt, werden je nach Ableitstrom auf einen zulässigen Spannungspegel begrenzt. Der Kondensator C1 in der Eingangsstufe 1 wirkt zusammen mit der Leitungsinduktivität und dem Innenwiderstand der nicht dargestellten Stromquelle als Filter gegen Störspannungen mit hohen Frequenzen, wobei die Grenzfrequenz hauptsächlich durch die Induktivität der Zuleitung bestimmt wird. Ueber den Spannungsteiler R1 und R2 wird dem Komparator D1 ein Eingangssignal zugeführt. Ueberschreitet die Ausgangsspannung des Spannungsteilers 2 bzw. die Eingangsspannung des Komparators D1 die interne Referenzspannung des Komparators D1, wird am Ausgang des Komparators D1 eine Spannung geführt, welche den Feldeffekt-Transistor T1 leitend schaltet. Der D-Anschluss des Feldeffekt-Transistors T1 zieht in der Folge über den Widerstand R6 den G-Anschluss des Feldeffekt-Transistors T2 auf einen tieferen Spannungspegel, wodurch der Feldeffekt-Transistor T2 hochohmig wird. Die Transientenschutzdiode V3 wird in Vorwärtsrichtung leitend und entlädt damit nicht dargestellte, am Ausgang der Schutzschaltung wirkende Kapazitäten über den Widerstand R6 und den Feldeffekt-Transistor T1. Die Transientenschutzdiode V3 schützt dabei in idealer Weise auch die Gate-Source-Strecke des Feldeffekt-Transistors T2.

Die Transientenschutzdiode V5 begrenzt Ueberschwingungen beim Ausschalten der Last und schützt zugleich den Feldeffekt-Transistor T1 vor unzulässigen Ueberspannungen am D-Anschluss. Bei einem Kurzschluss vom Feldeffekt-Transistor T2 wirkt die Transientenschutzdiode V5 begrenzend auf eine Ausgangsspannung $U_A$ der Schutzschaltung und schützt damit die Last, wobei in diesem Fehlerfall die Transientenschutzdiode V5 kurzgeschlossen wird.

Die Ausgangsspannung $U_A$ wird bei einer vorgegebenen Eingangs-Ueberspannung, welche beispielsweise länger als 1.5 $\mu$s ansteht, auf Null geschaltet. Sobald eine Eingangsspannung $U_E$ wieder auf den zulässigen Pegel abfällt, wird die Speisung auf den Ausgang der Schutzschaltung durchgeschaltet, indem wie im normalen Betriebsfall, am Komparator D1 kein Ausgangssignal erscheint und somit der Feldeffekt-Transistor T1 den Sperrzustand einnimmt und in der Folge das Gate des Feldeffekt-Transistors T2 diesen über den Widerstand R5 leitend hält. Der Spannungsabfall über die Drain-Source-Strecke vom Feldeffekt-Transistor T2 beträgt beispielsweise ca. 4 Volt.

## Ansprüche

1. Ausgleichs- und Ueberspannungsschutzschaltung für elektronische Geräte, insbesondere bei einer Bremseinrichtung eines Schienenfahrzeuges, gekennzeichnet durch
- eine als Hochspannungsbegrenzer ausgebildete und parallel zum Eingang der Schutzschaltung geschaltete Eingangsstufe (1),
- einen der Eingangsstufe (1) parallel nachgeschalteten Spannungsteiler (2),
- einen dem Spannungsteiler (2) nachgeschalteten Komparator (3), dessen Eingang mit dem Ausgang des Spannungsteilers (2) verbunden ist,
- eine stabilisierte, überspannungsgeschützte Speisung (4) für den Komparator (3) und
- einen ersten und einen zweiten elektronischen Schalter (5 und 6), wobei der erste Schalter (5), dessen Schalteingang mit dem Ausgang des Komparators (3) verbunden ist, im Schaltkreis des zweiten Schalters (6) und der zweite Schalter (6) zwischen Eingang und Ausgang der Schutzschaltung angeordnet sind.

2. Ausgleichs- und Ueberspannungsschutzschaltung gemäss Anspruch 1, dadurch gekennzeichnet, dass in der Eingangsstufe (1) eine Transientenschutzdiode V1 vorgesehen ist.

3. Ausgleichs- und Ueberspannungsschutzschaltung gemäss Anspruch 2, dadurch gekennzeichnet, dass parallel zur Transientenschutzdiode V1 ein Kondensator C1 vorgesehen ist.

4. Ausgleichs- und Ueberspannungsschutzschaltung gemäss einem der vorangehenden Ansprüche 1 bis 3, dadurch gekennzeichnet, dass am Ausgang des Spannungsteilers (2) eine Transientenschutzdiode V2 vorgesehen ist.

5. Ausgleichs- und Ueberspannungsschutzschaltung nach einem der Ansprüche 1 bis 4, dadurch gekennzeichnet, dass am Ausgang der Speisung (4) für den Komparator (3) eine Transientenschutzdiode V4 und ein dazu parallel geschalteter Kondensator C2 vorhanden sind.

6. Ausgleichs- und Ueberspannungsschutzschaltung nach einem der vorangehenden Ansprüche 1 bis 5, dadurch gekennzeichnet, dass als elektronische Schalter (5 und 6) zwei Feldeffekt-Transistoren T1 und T2 vorgesehen sind.

7. Ausgleichs- und Ueberspannungsschutzschaltung gemäss Anspruch 6, dadurch gekennzeichnet, dass an den D-Anschluss des Feldeffekt-Transistors T1 eine Transientenschutzdiode V5 angeschlossen ist.

8. Ausgleichs- und Ueberspannungsschutzschaltung gemäss einem der Ansprüche 6 oder 7, dadurch gekennzeichnet, dass zwischen den G- und S-Anschlüssen des Feldeffekt-Transistors T2 eine Transientschutzdiode V3 angeschlossen ist.

Europäisches Patentamt

**EUROPÄISCHER RECHERCHENBERICHT**

Nummer der Anmeldung

EP 89 10 9564

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | DE-C-3425235 (J.MORSCH)<br>* Spalte 3, Zeile 5 - Spalte 4, Zeile 17 * | 1-8 | H02H3/20<br>H02H3/06 |
| Y | WO-A-8602786 (O.AHUJA)<br>* Seite 21, Zeile 21 - Seite 29, Zeile 22; Figur 9 * | 1-8 | |
| A | DE-A-3402222 (LICENTIA PATENT-VERWALTUNG)<br>* Seite 8, Zeilen 6 - 21; Figur 3 * | 1,6,8 | |
| A | WO-A-8700700 (ROBERT BOSCH)<br>* Seite 4, Absatz 2 - Seite 5, Absatz 2 * | 1,2 | |
| A | FR-A-2548839 (AUTOMOBILES PEUGEOT)<br>* Seiten 3 - 4 * | 1,2 | |

RECHERCHIERTE SACHGEBIETE (Int. Cl.5)

H02H

Der vorliegende Recherchenbericht wurde für alle Patentansprüche erstellt

| Recherchenort | Abschlußdatum der Recherche | Prüfer |
|---|---|---|
| DEN HAAG | 13 SEPTEMBER 1989 | LIBBERECHT L.A. |